# EUROPEAN PATENT SPECIFICATION

(11) **EP 2 534 940 B1**
(45) Date of publication and mention of the grant of the patent: **06.05.2015**
(21) Application number: 12172441.3
(22) Date of filing: 18.06.2012
(51) Int. Cl.: A01G 9/00

(54) **Method for the cultivation of climbing plants.**
Verfahrung zum Aufziehen von Rankenpflanzen
Procédé pour cultiver des plantes grimpantes

(30) Priority: 16.06.2011 NL 2006948
(43) Date of publication of application: 19.12.2012
(73) Proprietor: Patentstar BV, 2771 NM Boskoop (NL)
(72) Inventor: Van der Starre, Huibert (Bart), 2742 KV Waddinxveen (NL); Van der Starre, Huibert (Bert), 2731 AH Benthuizen (NL)
(74) Representative: De Vries & Metman

(56) References cited:
- EP-A1- 1 208 739
- GB-A- 1 402 261
- NL-C- 1 036 485
- NL-C2- 1 002 416
- US-A- 4 937 971

## Description

The present invention relates to the cultivation of climbing plants, and in particular relates to a method for the cultivation of climbing plants which leads to a considerable shortening of the cultivation period of climbing plants.

In the current cultivation of climbing plants, especially in the cultivation of *Clematis,* cuttings are put out for rooting in the months of May and June. These rooted cuttings are then cleared in the months of October-November, sorted by size and by degree of rooting and stored in the freezer at minus 2°C. Next spring, the cuttings are potted outdoors in the months March to May. In mid July the first plants are available. The majority, however, is delivered in the period March to June of the next year. In this way a cultivation period of at least 14 months is reached, with an average of 20 months since to a large extent the sale occurs in the spring. The majority of the plants must therefore be stored during the winter period.

It is an object of the invention to provide a method, which reduces cultivation period of climbing plants with at least 9 months.

It is also an object of the invention to provide a method which does not require storage of deliverable plants during the winter period.

Therefore, the present invention provides a method for the cultivation of climbing plants, which method comprises:
a) potting rooted cuttings of a climbing plant,
b) growing the potted cuttings in a greenhouse,
c) cutting the grown climbing plants,
d) growing the cut climbing plants in the greenhouse under the same conditions of temperature and illumination as the previous growing step b),
e) optionally repeating the cutting and growing steps c) and d),
in which way plants are obtained which are suitable for delivery,
**characterized in that** growing in the case of steps b) and d) is performed at a daily temperature of 5 to 20 °C, and an illumination with a illuminance of 2000 to 15000 lux and an illumination duration of 8 to 20 hours per day.

Throughout the present invention, it is understood that climbing plants are those climbing plants which are self-winding or self-adherent. The climbing plants are further preferably well to moderately hardy.

Self-winding climbing plants include climbing plants from the genus *Actinidia, Akebia, Aristolochia, Celastrus, Clematis, Fallopia, Humulus, Lonicera, Passiflora, Vitis* and *Wisteria.* Self-adherent climbing plants include climbing plants from the genus *Campsis, Hedera, Hydrangea* and *Parthenocissus*.

Preferably, the climbing plant is a self-winding climbing plant, more preferably a self-winding climbing plant not bearing edible fruit.

Self-winding climbing plants not bearing edible fruit include climbing plants from the genera *Akebia, Aristolochia, Celastrus, Clematis, Fallopia, Lonicera* and *Wisteria.*

Even more preferred are climbing plants of the genera Lonicera and *Clematis.* The method as described herein, however, is particularly suitable for the cultivation of climbing plants of the genus *Clematis.*

Unlike the current cultivation, where the climbing plants gradually enter dormancy as from October, in the method as described herein the climbing plants are stimulated to grow by artificial illumination and temperature regulation at the time they normally enter dormancy, usually from October.

As a starting material for the cultivation method as described herein rooted cuttings of the climbing plant in question are used.

Cuttings may be cut, for example, from vines (runners) of the climbing plants, which vines can be obtained by cutting the climbing plants, for example, as described herein. A cutting generally consist of a stem with a full pair of leaves and two axillary buds. In species with small leaves two leaves generally remain on the stem.

The cuttings are inserted in a suitable substrate, also called cutting soil, in order to obtain rooting of the cuttings. Cutting soil is different from normal potting soil in that, for example, cutting soil contains more finer particles, and also contains certain additives which ensure that the air / water / soil ratio is optimal to obtain rooting. An example of such an additive is expanded perlite.

The substrate is placed in a suitable container. Preferably, an individual container is used for each cutting. More preferably, each individual cutting is inserted into an individual container in which cutting soil is provided with an casing, for example a casing made of paper or peat, or made of a biodegradable material, or an individual container in which cutting soil is bound together in some other way, for example by an adhesive. Such an individual container is also called a cutting plug or paperpot. The use of an individual container is advantageous since a plug inserted in a cutting plug more rapidly roots. Moreover, these cuttings can immediately be potted as soon as they have sufficient roots. An individual container usually has a volume of 25 to 100 ml.

The cuttings inserted in the substrate are then allowed to root. For this purpose the cuttings are covered with plastic foil and placed in the greenhouse. For example, cutting plugs can be placed under a tunnel of plastic foil. During the rooting phase, the foil is gradually removed. The rooting phase usually takes about 6 to 10 weeks. The resulting rooted cuttings are suitable to pot.

Suitable conditions for rooting are a daily temperature of 12 to 25 ° C and a relative humidity of 95 to 100%. Rooting can occur with or without illumination and rooting with illumination can be done using assimilation light or control light. The selected illumination may, for example, depend on the moment in time when the cuttings are cut.

As used herein, illumination with assimilation light is understood to mean an illumination with an illuminance of 2,000 to 15,000 lux and an illumination duration of 8 to 20 hours per day. As used herein, illumination with control light is understood to mean an illumination with a illuminance that is 1 to 20% of that of assimilation light, usually a illuminance of 20 to 400 lux, and an illumination time of 8 to 20 hours per day.

Rooting without illumination is usually performed with cuttings that are cut in the period June to July. Rooted cuttings can be kept active up to the moment of potting by means of illumination (both control light as well as assimilation light is possible) or can be given a sufficient period of dormancy. For cuttings that are cut in the period August to October rooting under illumination (both assimilation light as well as control light is possible) is performed, usually directly followed by growing the rooted cuttings as described herein.

Under daily temperature as used herein is meant the average temperature per 24 hours. This temperature thus is not the minimum or maximum temperature in an absolute sense.

Illumination as described herein can be performed by natural and/or artificial illumination, whereby natural light can be supplemented with artificial light when necessary. Artificial illumination can be performed using any suitable illumination system, e.g. a system equipped with LED lamps, fluorescent lamps, PL lamps, and the like. Usually, the illumination regime is performed for each day of the given period.

Rooted cuttings are potted in a suitable substrate which is placed in a suitable container. An appropriate substrate for this purpose is based on peat and/or has a high peat content, usually a peat content of from 50 to 100% on a weight basis. The other components of the substrate can be coconut fiber, granular fiber, bark, pumice and horticultural clay. The substrate may also be provided with short-term and/or long-term acting fertilizer and usually also with a flowing agent. An example of a suitable substrate is a substrate that contains 50% Nordic Peat fraction 2 (Slingerland Potting Soil (Horticoop)) and 50% baltic peat, and further fertilizers and flowing agent. Suitable containers are pots having a volume of 0.7 to 5.5 liters. A very suitable container, for example, is described in EP 1 208 739.

The potted cuttings are then grown in the greenhouse at a daily temperature of 5 to 20 °C, an illumination with an illuminance of 2,000 to 15,000 lux and a duration of illumination of 8 to 20 hours per day. The duration of cultivation is dependent on the growth rate of the plant, and usually takes a period of about 4 to 10 weeks.

Preferably, the cuttings are grown at a daily temperature of from 6 to 16 °C, more preferably of from 7 to 14 °C, most preferably at a daily temperature of from 8-12 °C.

The illuminance of the illumination preferably is 3,000 to 10,000 lux.

The illumination time preferably is 10 to 18 hours per day, more preferably is 14 to 18 hours.

The grown climbing plants are then cut, preferably to 2 to 3 leave pairs above the soil. The cut vines are collected and can be used as starting material for the cultivation of cuttings. The cut plants are grown under the same conditions as those used for growing the potted cuttings. After a period of growth of the cut plants of usually about 6 to 10 weeks, sufficient regrowth is obtained. For plants with a low growth rate a longer period of time may be required.

Depending on the plant species, the plant is then suitable for delivery, or it is necessary to cut the plants again. For e.g. *Clematis* it may be necessary to cut the plants again. These cut vines can also be used as starting material for the cultivation of cuttings. After a period of growth of again about 6 to 10 weeks after the last cutting of the climbing plants, the plants are ready for delivery.

The cut vines of the grown climbing plants as described above can be used as starting material for the cultivation of cuttings.

For cuttings that are cut in the period December to mid-March rooting can be performed under illumination with assimilation light and the rooted cuttings can be potted and then be kept under illumination with control light up to the growth period. For cuttings that are cut in the period mid-March to late April rooting can also be performed under illumination with assimilation light, and the rooted cuttings can then be potted without using control light and then immediately be grown.

The method as described herein for cultivating climbing plants can advantageously be performed in a period that includes the winter period, i.e. in a period that includes the period from October of one year until April of the next year.

With this method, the cultivation period, is reduced from a cultivation period of at least 14 and an average of 20 months to a cultivation period of 22 to 40 weeks. The method as described herein thus results in a considerable reduction of the cultivation period of climbing plants. Storage of deliverable plants during the winter period is not longer necessary and the plants can now be delivered in the favorable spring time, starting from April.

## Claims

1. A method for the cultivation of climbing plants comprising:
a) potting rooted cuttings of a climbing plant,
b) growing the potted cuttings in a greenhouse,
c) cutting the grown climbing plants,
d) growing the cut climbing plants in the greenhouse under the same conditions of temperature and illumination as the previous growing step b),
e) optionally repeating the cutting and growing steps c) and d),
in which way plants are obtained which are suitable for delivery,
**characterized in that** growing in the case of steps b) and d) is performed at a daily temperature of 5 to 20 °C, and an illumination with a illuminance of 2000 to 15000 lux and an illumination duration of 8 to 20 hours per day.

2. Method according to claim 1 wherein growing occurs in a period comprising the period from October of one year until April of the next year.

3. A method as claimed in claim 1 or claim 2 wherein each rooted cutting is provided with an individual container.

4. A method as claimed in any one of the claims 1 to 3 wherein growing of the potted cuttings and/or growing of the cut climbing plants occurs at a daily temperature of 6 to 16 °C and/or an illumination with a illuminance of 3,000 to 10,000 lux and/or an illumination duration of 10 to 18 hours per day.

5. A method as claimed in any one of the claims 1 to 4 wherein growing of the potted cuttings occupies a period of 4 to 10 weeks and/or growing of the cut climbing plants occupies a period of 6 to 10 weeks.

6. A method as claimed in any one of the claims 1 to 5 wherein the climbing plant is a self-winding or a self-adherent climbing plant.

7. Method according to claim 6 wherein the self-winding or self-adherent climbing plant is from the genus *Actinidia, Akebia, Aristolochia, Campsis, Celastrus, Clematis, Fallopia, Hedera, Humulus, Hydran gea, Lonicera, Passiflora, Parthenocissus, Vitis* or *Wisteria.*

8. A method as claimed in any one of the claims 1 to 5 wherein the climbing plant is a self-winding climbing plant.

9. Method according to claim 8 wherein the self-winding climbing plant is from the genus *Actinidia, Akebia, Aristolochia, Celastrus, Clematis, Fallopia, Humulus, Lonicera, Passiflora, Vitis* or *Wisteria.*

10. Method according to claim 8 wherein the self-winding climbing plant does not bear edible fruit.

11. Method according to claim 10, wherein the self-winding climbing plant is from the genus *Akebia, Aristolochia, Celastrus, Clematis, Fallopia, Lonicera* or *Wisteria.*

12. Method according to claim 8 wherein the self-winding climbing plant is from the genus *Lonicera* or *Clematis.*

13. Method according to claim 8 wherein the self-winding climbing plant is from the genus *Clematis.*

## Patentansprüche

1. Ein Verfahren für die Kultivierung von Kletterpflanzen, aufweisend:
a) Eintopfen von verwurzelten Stecklingen einer Kletterpflanze,
b) Wachsenlassen der eingetopften Stecklinge in einem Gewächshaus,
c) Beschneiden der gewachsenen Kletterpflanzen,
d) Wachsenlassen der beschnittenen Kletterpflanzen in dem Gewächshaus unter denselben Bedingungen von Temperatur und Beleuchtung wie beim vorhergehenden Wachsenlassen-Schritt b)
e) optionales Wiederholen des Beschneidungs- und des Wachsenlassen-Schritts c) und d),
auf welche Weise Pflanzen erhalten werden, welche zur Auslieferung geeignet sind,
**gekennzeichnet dadurch, dass** das Wachsenlassen in dem Fall der Schritte b) und d) durchgeführt wird bei einer täglichen Temperatur von 5 bis 20 °C und einer Beleuchtung mit einer Beleuchtungsstärke von 2000 bis 15000 Lux und einer Beleuchtungsdauer von 8 bis 20 Stunden pro Tag.

2. Verfahren gemäß Anspruch 1, wobei das Wachsenlassen in einem Zeitraum stattfindet, welcher den Zeitraum von Oktober eines Jahres bis April des nächsten Jahres aufweist.

3. Ein Verfahren wie in Anspruch 1 oder Anspruch 2 beansprucht, wobei jeder verwurzelte Steckling mit einem individuellen Behältnis bereitgestellt ist.

4. Ein Verfahren wie in irgendeinem der Ansprüche 1 bis 3 beansprucht, wobei das Wachsenlassen der eingetopften Stecklinge und/oder das Wachsenlassen der beschnittenen Kletterpflanzen bei einer täglichen Temperatur von 6 bis 16 °C und/oder einer Beleuchtung mit einer Beleuchtungsstärke von 3000 bis 10000 Lux und/oder einer Beleuchtungsdauer von 10 bis 18 Stunden pro Tag stattfindet.

5. Ein Verfahren wie in irgendeinem der Ansprüche 1 bis 4 beansprucht, wobei das Wachsenlassen der eingetopften Stecklinge einen Zeitraum von 4 bis 10 Wochen einnimmt und/oder das Wachsenlassen der beschnittenen Kletterpflanzen einen Zeitraum von 6 bis 10 Wochen einnimmt.

6. Ein Verfahren wie in irgendeinem der Ansprüche 1 bis 5 beansprucht, wobei die Kletterpflanze eine selbstwindende oder eine selbsthaftende Kletterpflanze ist.

7. Verfahren gemäß Anspruch 6, wobei die selbstwindende oder die selbsthaftende Kletterpflanze aus der Gattung Actinidia, Akebia, Aristolochia, Campsis, Celastrus, Clematis, Fallopia, Hedera, Humulus, Hydrangea, Lonicera, Passiflora, Parthenocissu, Vitis oder Wisteria ist.

8. Ein Verfahren wie in irgendeinem der Ansprüche 1 bis 5 beansprucht, wobei die Kletterpflanze eine selbstwindende Kletterpflanze ist.

9. Verfahren gemäß Anspruch 8, wobei die selbstwindende Kletterpflanze aus der Gattung Actinidia, Akebia, Aristolochia, Celastrus, Clematis, Fallopia, Humulus, Lonicera, Passiflora, Vitis oder Wisteria ist.

10. Verfahren gemäß Anspruch 8, wobei die selbstwindende Kletterpflanze keine essbaren Früchte trägt.

11. Verfahren gemäß Anspruch 10, wobei die selbstwindende Kletterpflanze aus der Gattung Akebia, Aristolochia, Celastrus, Clematis, Fallopia, Lonicera, oder Wisteria ist.

12. Verfahren gemäß Anspruch 8, wobei die selbstwindende Kletterpflanze aus der Gattung Lonicera oder Clematis ist.

13. Verfahren gemäß Anspruch 8, wobei die selbstwindende Kletterpflanze aus der Gattung Clematis ist.

## Revendications

1. Procédé pour la culture des plantes grimpantes comprenant :
a) la mise en pot de boutures racinées d'une plante grimpante,
b) la culture des boutures en pot dans une serre,
c) la coupe des plantes grimpantes cultivées,
d) la culture des plantes grimpantes coupées dans la serre dans les mêmes conditions de température et d'illumination que l'étape de culture b) précédente,
e) la répétition éventuelle des étapes de coupe et de culture c) et d),
de quelle façon il est obtenu des plantes qui sont appropriées pour une délivrance,
**caractérisé en ce que** la culture dans le cas des étapes b) et d) est effectuée à une température quotidienne de 5 à 20 °C, et une illumination avec une illuminance de 2000 à 15000 lux et une durée d'illumination de 8 à 20 heures par jour.

2. Procédé selon la revendication 1, dans lequel la culture se déroule dans une période comprenant la période d'octobre d'une année jusqu'à avril de l'année suivante.

3. Procédé selon la revendication 1 ou la revendication 2, dans lequel chaque bouture racinée est fournie avec un récipient individuel.

4. Procédé selon l'une quelconque des revendications 1 à 3, dans lequel la culture des boutures en pot et/ou la culture des plantes grimpantes coupées se déroule à une température quotidienne de 6 à 16 °C et/ou une illumination avec une illuminance de 3000 à 10000 lux et/ou une durée d'illumination de 10 à 18 heures par jour.

5. Procédé selon l'une quelconque des revendications 1 à 4, dans lequel la culture des boutures en pot occupe une période de 4 à 10 semaines et/ou la culture des plantes grimpantes coupées occupe une période de 6 à 10 semaines.

6. Procédé selon l'une quelconque des revendications 1 à 5, dans lequel la plante grimpante est une plante grimpante s'auto-enroulant ou auto-adhérente.

7. Procédé selon la revendication 6, dans lequel la plante grimpante s'auto-enroulant ou auto-adhérente est du genre *Actinidia, Akebia, Aristolochia, Campsis, Celastrus, Clematis, Fallopia, Hedera, Humulus, Hydrangea, Lonicera, Passiflora, Parthenocissus, Vitis* ou *Wisteria.*

8. Procédé selon l'une quelconque des revendications 1 à 5, dans lequel la plante grimpante est une plante grimpante s'auto-enroulant.

9. Procédé selon la revendication 8, dans lequel la plante grimpante s'auto-enroulant est du genre *Actinidia, Akebia, Aristolochia, Celastrus, Clematis, Fallopia, Humulus, Lonicera, Passiflore, Vitis* ou *Wisteria.*

10. Procédé selon la revendication 8, dans lequel la plante grimpante s'auto-enroulant ne porte pas de fruit comestible.

11. Procédé selon la revendication 10, dans lequel la plante grimpante s'auto-enroulant est du genre *Akebia, Aristolochia, Celastrus, Clematis, Fallopia, Lonicera,* ou *Wisteria.*

12. Procédé selon la revendication 8, dans lequel la plante grimpante s'auto-enroulant est du genre *Lonicera* ou *Clematis.*

13. Procédé selon la revendication 8, dans lequel la plante grimpante s'auto-enroulant est du genre *Clematis.*
